# DEMANDE DE BREVET EUROPEEN

(11) **EP 1 884 816 A2**
(43) Date de publication de la demande: **06.02.2008**
(21) Numéro de dépôt: 07111971.3
(22) Date de dépôt: 06.07.2007
(51) Int. Cl.: G02B 27/01

(54) **Dispositif de génération de la fonction de secours dans un viseur tete haute**

(30) Priorité: 11.07.2006 FR 0606307
(71) Demandeur: Thales, 92200 Neuilly Sur Seine (FR)
(72) Inventeur: Soler, Michel, 33560, CARBON-BLANC (FR)
(74) Mandataire: Bréda, Jean-Marc

(57) **Abrégé**

Le domaine de l'invention est celui de la génération de la fonction de secours dans les cockpit d'aéronefs. Cette fonction est plus connue sous le terme anglais « Standby ». L'invention concerne un dispositif de génération de la fonction de secours pour aéronef, ledit dispositif comprenant au moins :
• Des capteurs de mesure d'inertie et de pression (1) ;
• Des moyens de traitement électroniques (2) des données issues desdits capteurs ;
• Des moyens de calcul (6) permettant de générer une symbologie graphique représentative de l'altitude, de la vitesse et de l'attitude de l'aéronef ;

Des moyens d'affichage (7, 8, 9) de ladite symbologie appartenant à un viseur Tête Haute et permettant de générer une image collimatée en superposition sur le paysage extérieur.

## Description

Le domaine de l'invention est celui de la génération de la fonction de secours dans les cockpit d'aéronefs. Cette fonction est plus connue sous le terme anglais « Standby ».

Généralement, les visualisations présentes dans un cockpit d'aéronef sont de deux types. On distingue :
- les visualisations de planches de bord encore appelées visualisations « Tête Basse » ou HDD, acronyme signifiant « Head Down Display » et
- les visualisation dites « Tête Haute » encore appelées HUD, acronyme signifiant « Head Up Display ».

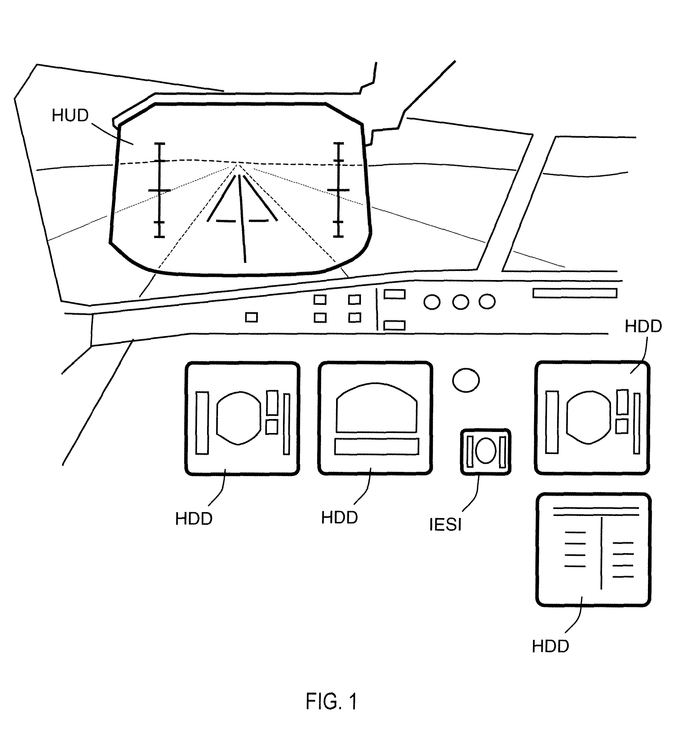

Sur la figure 1 qui représente en partie une planche de bord d'aéronef vue du pilote, ont été représentés en traits continus gras ces différentes visualisations HDD et HUD.

Les visualisations de planches de bord ou HDD sont constituées essentiellement de grands écrans, généralement à cristaux liquides fournissant à l'équipage les différentes informations nécessaires au pilotage, à la navigation et au contrôle de l'appareil. La visualisation affichant les informations nécessaires au pilotage est encore appelée PFD, acronyme signifiant « Primary Flight Display ». Ces visualisations sont reliées au moyen de bus de données à des calculateurs électroniques de bord qui génèrent, à partir d'informations venant de différents senseurs, les données nécessaires à l'affichage.

Bien entendu, les présentations d'informations sont vitales pour la sécurité du vol. En cas de panne grave des visualisations de planches de bord, tous les aéronefs sont munis d'instruments de secours permettant d'afficher au moins les informations vitales pour le pilotage de l'aéronef qui sont celles habituellement affichées sur le PFD. Ces informations sont essentiellement :
- L'altitude de l'aéronef ;
- La vitesse de l'aéronef ;
- L'attitude de l'aéronef .

Jusqu'au milieu des années 1980, ces fonctions étaient assurées par trois instruments différents appelés altimètre de secours, anémomètre de secours et horizon de secours. Ces trois instruments possédaient leur propre réseau de capteurs de façon à être totalement autonomes en cas de panne grave des visualisations ou des instruments principaux. A partir de la fin des années 1980, ces trois instruments de secours ont été progressivement supplantés par un instrument de secours unique encore appelé ESI, acronyme signifiant «Electronic Standby Instrument» ou IESI, acronyme signifiant «Integrated Electronic Standby Instrument». Cet instrument ESI qui est représenté en figure 1 rassemble dans un seul équipement :
- Des senseurs permettant d'assurer les mesures de pression statique et totale nécessaires à la détermination de l'altitude et de la vitesse, les capteurs inertiels et les accéléromètres nécessaires à la détermination de l'attitude ;
- L'électronique de traitement permettant de calculer les informations de vitesse, d'altitude et d'attitude ;
- L'électronique permettant de calculer une image graphique représentative de ces informations ;
- Un écran plat d'affichage à cristaux liquides ;
- Des dispositifs de connexion :
   o Pneumatiques permettant de se connecter aux sondes de pression statiques et totale ;
   o Electriques;
- Des interfaces électroniques d'entrée/sortie permettant l'accès à des bus de données ;
- Des interfaces de commande sous forme de boutons poussoirs ou de boutons rotatifs.

En option, l'instrument de secours ESI peut posséder sa propre source d'alimentation électrique de façon à permettre son fonctionnement, même en cas de panne du réseau d'alimentation de secours.

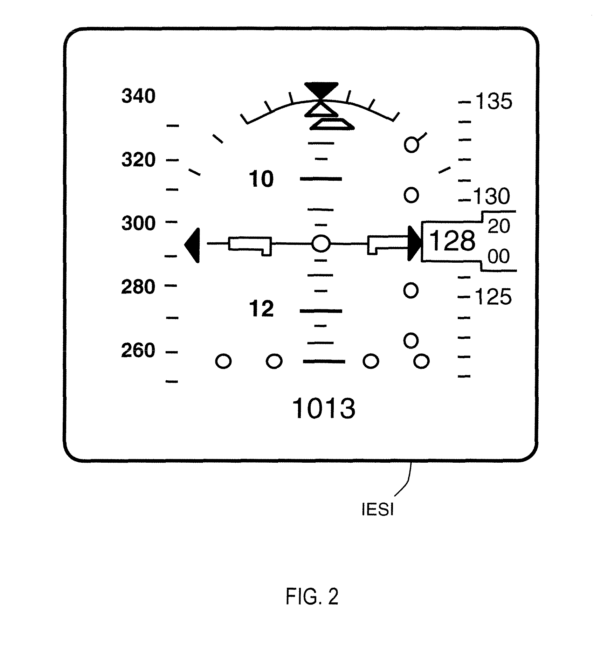

La figure 2 représente une figuration typique affichée sur un instrument de secours de ce type où l'échelle de gauche donne les informations de vitesse, l'échelle de droite les informations d'altitude et la figure centrale les informations d'attitude de l'aéronef.

Cet instrument qui constitue un progrès significatif par rapport aux instruments électro-mécaniques classiques des générations précédentes présente cependant certains inconvénients. D'une part, il est généralement de petite dimension de façon à occuper une place réduite sur la planche de bord. Le format standard des écrans de ce type d'instrument dit 3ATI, acronyme signifiant « Air Transport Indicator » est un carré d'environ 60 millimètres de côté. Cet instrument est alors vu du pilote sous un angle moyen en site et en gisement de 2,5 degrés. Par conséquent, la lisibilité des informations présentées s'en trouve réduite. D'autre part, même si le coût d'un tel instrument reste inférieur à celui de trois instruments classiques, il reste cependant assez élevé.

Pour pallier aux inconvénients précédents, la demande de brevet US 2003/0030911 propose d'intégrer la fonction de présentation des informations ESI dans le masque à oxygène. Cette solution présente de nombreux inconvénients. Elle ne peut être mise en oeuvre que, lorsque le pilote porte son masque, c'est-à-dire dans des conditions où la sécurité du vol est gravement compromise. Il est, bien entendu, impossible d'assurer une superposition des informations présentées sur le paysage extérieur. Enfin, c'est une solution complexe à mettre en oeuvre et nécessairement coûteuse dans la mesure où le système mis en oeuvre doit être de petites dimensions, parfaitement sécurisé et opérationnel dans des conditions extrêmes.

Les visualisations dites « Tête Haute », encore appelées en terminologie anglo-saxonne « Head-Up Displays » et également connues sous l'acronyme « HUD » ont d'abord été utilisés sur avions d'arme pour se généraliser ensuite dans les années 1980 à tous types d'appareils. Ces systèmes sont intégrés et fixés dans le cockpit avec une grande précision de façon à pouvoir présenter des symboles dits « conformes », c'est-à-dire parfaitement superposés sur le paysage extérieur. Ils présentent au pilote une information visuelle collimatée dans son champ de vision et en superposition sur le paysage extérieur. Cette information visuelle concerne plus particulièrement le pilotage et sert notamment au décollage et à l'atterrissage. On peut ainsi présenter au pilote une piste synthétique en superposition sur le paysage comme indiqué en figure 1. Un «HUD» comporte donc trois parties principales :
- Un calculateur électronique relié aux bus de données avion ;
- Un afficheur qui peut être un tube cathodique ou un écran à cristaux liquides ;
- Un système optique de collimation et de superposition d'images sur le paysage extérieur. La superposition sur le paysage est assurée généralement par une lame optique appelée « combineur », comme on peut le voir sur la figure 1. La position de l'ensemble du système optique est parfaitement déterminée par rapport au cockpit de façon que les symboles dits « conformes » comme la ligne d'horizon ou une piste synthétique, affichés par le viseur soient superposés sur le paysage extérieur avec une très grande précision.

Les viseurs Tête Haute ont comme principal avantage de présenter un grand champ de vision qui peut atteindre 35 degrés en gisement et 26 degrés en site.

L'objet de l'invention est d'utiliser le viseur Tête Haute présent dans le cockpit pour remplacer en totalité ou en partie les fonctions « Standby » de l'instrument de secours électronique. On résout ainsi en grande partie les inconvénients précédents, sans surcoûts significatifs.

Plus précisément, l'invention a pour objet un dispositif de génération de la fonction de secours pour aéronef, ledit dispositif comprenant au moins :
- Des capteurs de mesure d'inertie et de pression ;
- Des moyens de traitement électroniques des données issues desdits capteurs ;
- Des moyens de calcul permettant de générer une symbologie graphique représentative de l'altitude, de la vitesse et de l'attitude de l'aéronef ;
- Des moyens d'affichage de ladite symbologie ;
caractérisé en ce qu'au moins les moyens d'affichage appartiennent à un viseur Tête Haute et permettent de générer une image collimatée en superposition sur le paysage extérieur, le viseur Tête Haute étant un instrument intégré et fixé dans le cockpit.

Avantageusement, les capteurs de mesure d'inertie et de pression, les moyens de traitement électroniques des données issues desdits capteurs et les moyens de calcul permettant de générer la symbologie graphique représentative de l'altitude, de la vitesse et de l'attitude de l'aéronef sont intégrés audit viseur Tête Haute.

Avantageusement, au moins les capteurs de mesure d'inertie et de pression et les moyens de calcul sont intégrés à un instrument de secours de type ESI, les données nécessaires à l'affichage de la symbologie graphique représentative de l'altitude, de la vitesse et de l'attitude de l'aéronef étant transmises dudit instrument de secours aux moyens d'affichage du viseur Tête Haute à travers au moins un bus de données et/ou vidéo.

L'invention sera mieux comprise et d'autres avantages apparaîtront à la lecture de la description qui va suivre donnée à titre non limitatif et grâce aux figures annexées parmi lesquelles :
- La figure 1 représente une vue partielle d'une planche de bord d'aéronef ;
- La figure 2 représente un exemple de symbologies affichée sur un instrument de secours électronique ;
- La figure 3 représente un premier mode de réalisation d'un dispositif de génération de la fonction de secours selon l'invention ;
- La figure 4 représente un second mode de réalisation d'un dispositif de génération de la fonction de secours selon l'invention.

Le coeur de l'invention est de faire afficher la symbologie de type PFD dédiée à l'instrumentation de secours par le viseur Tête Haute. Dans ce cas, la symbologie affichée nécessite certaines adaptations mineures :
- En effet, la symbologie affichée étant destinée à être superposée sur le paysage extérieur, il est préférable qu'elle soit composée principalement de chiffres, de textes, de lignes courbes et de segments.
- Généralement, les afficheurs des viseurs Tête Haute sont monochromes de couleur verte alors que les afficheurs des instruments de secours affichent une image couleur. Il faut là encore adapter la symbologie en conséquence en utilisant, par exemple, des niveaux de gris, des surbrillances ou d'autres effets de type video inverse et clignotement.
- Le format d'affichage des instruments de secours est carré alors que celui des viseurs Tête Haute est rectangulaire. Il est, dans ce cas, préférable de conserver le format carré et d'afficher la symbologie dans une partie du champ du viseur Tête Haute, par exemple dans un champ de 25 degrés en gisement par 25 degrés en site.

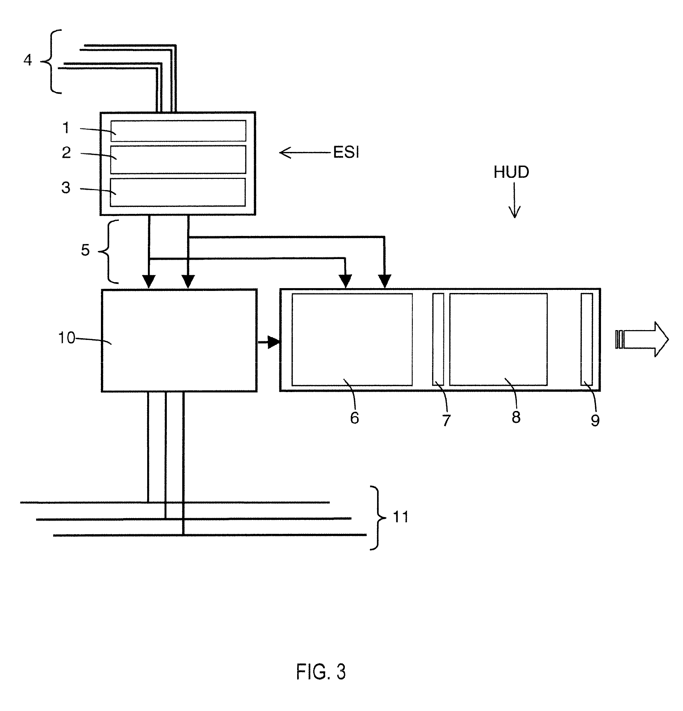

Il existe différents modes possibles de réalisation du dispositif selon l'invention. Dans un premier mode représenté en figure 3, on conserve dans le cockpit l'instrument de secours électronique ESI. Dans ce cas, l'instrument de secours ESI comprend classiquement :
- Des capteurs de mesure 1 d'inertie et de pression reliés par des liaisons pneumatiques 4 aux sondes de pression statique et totale qui ne sont pas représentées sur la figure 3 ;
- Des moyens électroniques de traitement 2 des données issues desdits capteurs 1 ;
- Une électronique de génération de symboles et des interfaces électroniques 3 d'entrée/sortie permettant l'accès à des bus de données et/ou video.

Le viseur Tête Haute HUD comporte classiquement:
- Une électronique de génération de symboles 6 ;
- Un afficheur 7 qui peut être un tube cathodique ou une matrice à cristaux ;
- Une optique de collimation 8 encore appelée optique-relais,
- Un combineur 9 assurant la superposition sur le paysage extérieur de l'image issue de l'afficheur. Cette image est représentée symboliquement par une flèche droite rayée sur la figure 3 ;

Ce viseur est relié à un calculateur électronique 10 , lui-même relié au réseau de bus de données avion 11.

Dans ce dispositif, les informations nécessaires à l'affichage de la symbologie sont transmises par des bus de transmission 5 soit de données soit d'images vidéo. Ces informations parviennent soit au calculateur électronique soit à l'électronique de génération de symboles du viseur Tête Haute.

Lorsque les informations fournies par l'instrument de secours sont de type vidéo, elles sont de simples copies de la symbologie présentée sur l'instrument de secours. Le calculateur ou l'électronique de génération de symboles peuvent facilement recevoir ce type de format. En effet, les dernières technologies numériques font du viseur un simple moniteur à entrée digitale.

Lorsque les informations fournies sont des données émises sous un format au standard aéronautique comme le format ARINC 429, elles peuvent également être facilement traitées par le calculateur ou l'électronique de génération de symboles dans la mesure où ces standards correspondent à ceux mis en oeuvre par une grande majorité de calculateurs, de senseurs et d'instruments électroniques de bord.

Comme il a été dit, la symbologie affichée dans le viseur est spécifiquement adaptée aux particularités de l'affichage Tête Haute tant au niveau de sa couleur, de sa dimension que de son graphisme. Elle sera généralement présentée en vert, la largeur de tracé des différents symboles étant de l'ordre du milliradian mais pouvant être, dans ce cas particulier de l'utilisation du HUD, plus large.

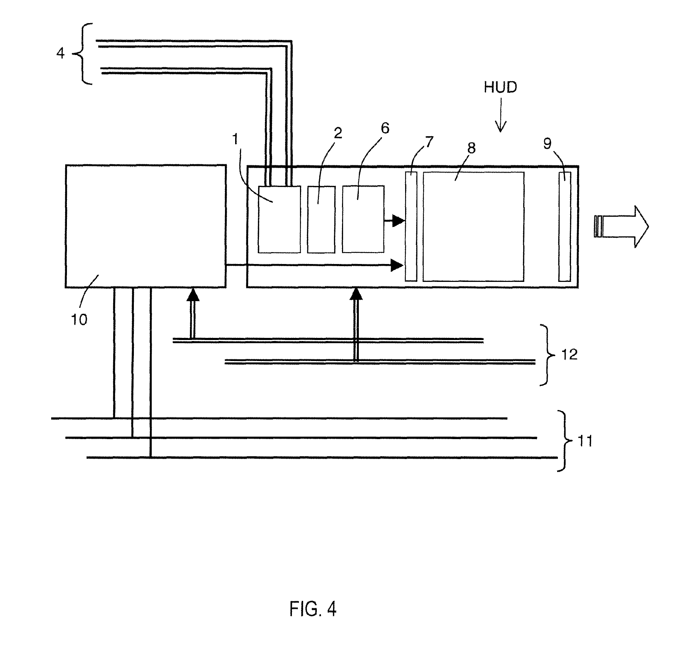

Dans un second mode de réalisation, on supprime l'instrument de secours et on intègre les différentes fonctions réalisées par cet instrument au viseur Tête Haute. Dans ce cas, le viseur HUD comprend les fonctions de base de l'instrumentation de secours. Comme indiqué sur la figure 4, le HUD comprend alors :
- Des capteurs de mesure 1 d'inertie et de pression reliés par des liaisons pneumatiques 4 aux sondes de pression statique et totale non représentées sur la figure 4 ;
- Des moyens de traitement électroniques 2 des données issues desdits capteurs ;
- Une électronique de génération de symboles 6 ;
- Un afficheur 7 qui peut être un tube cathodique ou une matrice à cristaux ;
- Une optique de collimation 8 encore appelée optique-relais,
- Un combineur 9 assurant la superposition sur le paysage extérieur de l'image issue de l'afficheur.

Ce viseur est relié à un calculateur électronique 10, lui-même relié au réseau de bus de données avion 11. L'alimentation électrique 12 au moins de la partie du viseur dédiée à la réalisation de la fonction de secours doit être assurée par une alimentation de secours sécurisée ou par des batteries dédiées à ces fonctions.

L'implantation de ces nouvelles fonctions ne pose pas de problèmes particuliers dans la mesure où le volume total des différents capteurs et de leur électronique de traitement associée ne dépasse pas quelques centimètres cube, le volume disponible dans un viseur tête Haute étant nettement supérieur à celui d'un ESI.

Bien entendu, le viseur conserve ces fonctions classiques de présentations de symbologies d'aide au pilotage.

Quelque soit le type de réalisation retenue, le mode d'affichage de la symbologie de secours peut déclenché :
- soit automatiquement en cas de détection de panne grave ;
- soit manuellement par le pilote sur la base de scenarii de pannes identifiées comme la perte totale ou partielle des visualisations Tête Basse ou la perte partielle du HUD.

## Revendications

1. Dispositif de génération de la fonction de secours pour aéronef, ledit dispositif comprenant au moins :
• Des capteurs de mesure d'inertie et de pression (1) ;
• Des moyens de traitement électroniques des données issues desdits capteurs (2) ;
• Des moyens de calcul (3, 6) permettant de générer une symbologie graphique représentative de l'altitude, de la vitesse et de l'attitude de l'aéronef ;
• Des moyens d'affichage de ladite symbologie (7, 8, 9) ;
**caractérisé en ce qu'**au moins les moyens d'affichage appartiennent à un viseur Tête Haute (HUD) et permettent de générer une image collimatée en superposition sur le paysage extérieur, le viseur Tête Haute étant un instrument intégré et fixé dans le cockpit.

2. Dispositif de génération de la fonction de secours selon la revendication 1, **caractérisé en ce que** les capteurs de mesure d'inertie et de pression (1), les moyens de traitement électroniques (2) des données issues desdits capteurs et les moyens de calcul (6) permettant de générer la symbologie graphique représentative de l'altitude de la vitesse et de l'attitude de l'aéronef sont intégrés audit viseur Tête Haute (HUD).

3. Dispositif de génération de la fonction de secours selon la revendication 1, **caractérisé en ce que** au moins les capteurs de mesure d'inertie et de pression (1) et les moyens de traitement électroniques (2) des données issues desdits capteurs sont intégrés à un instrument de secours de type ESI, les données nécessaires à l'affichage de la symbologie graphique représentative de l'altitude, de la vitesse et de l'attitude de l'aéronef étant transmises dudit instrument de secours aux moyens d'affichage du viseur Tête Haute à travers au moins un bus de données et/ou video.
